# EUROPEAN PATENT SPECIFICATION

(11) **EP 2 541 225 B1**
(45) Date of publication and mention of the grant of the patent: **07.02.2018**
(21) Application number: 10846631.9
(22) Date of filing: 01.12.2010
(51) Int. Cl.: G01M 17/007, G01L 3/26

(54) **VEHICLE TESTING DEVICE with SIMULATED WHEEL DEVICEs**
FAHRZEUGTESTVORRICHTUNG mit SIMULIERTEn RADVORRICHTUNGen
DISPOSITIF D'ESSAI DE VÉHICULE comprenant des roues simulées

(30) Priority: 26.02.2010 JP 2010043105
(43) Date of publication of application: 02.01.2013
(73) Proprietor: Ono Sokki Co., Ltd., Yokohama-shi Kanagawa 222-8507 (JP)
(72) Inventor: ECHIGO, Kentaro, Yokohama-shi Kanagawa 226-8507 (JP)
(74) Representative: Fenlon, Christine Lesley
(86) International application number: PCT/JP2010/071447
(87) International publication number: WO 2011/104968

(56) References cited:
- DE-A1- 3 507 906
- JP-A- 10 508 685
- JP-A- 2008 151 509
- JP-A- 2010 121 988
- JP-Y2- 4 053 567
- JP-Y2- 64 007 294
- US-A- 4 689 998
- US-A- 5 323 644

## Description

### Technical Field

The present invention relates to a simulation wheel apparatus which is used for a vehicle test apparatus to measure motivity transferred from an engine to a wheel, and the vehicle test apparatus.

### Background Art

Among running tests for a vehicle, there is a test of measuring what a transfer status of motivity transferred from an engine to an axle shaft is while moving.

When such a running test for a vehicle is performed, chassis dynamometers are commonly used. However, since the vehicle has to be fixed when such a chassis dynamometer is used, a test is performed under status in which a suspension, a damper and the like do not operate. In such a manner, it is impossible to perform a test by simulating a status in which a real vehicle moves while a suspension, a damper and the like are activated.

For this reason, in order to perform a test in which a suspension and a damper operate while a real vehicle is moving, it is conceivable to perform a running test by using a low inertia dynamometer instead of the above-described chassis dynamometer (see, for example, Non-patent Literature 1).

Conventionally, when a running test is performed by using such a dynamometer, the suspension and the damper are removed, a brake and the like are also removed, a bearing for measurement is attached to an axle shaft, and then a transfer status of motivity transferred from an engine to the axle shaft is measured. However, recently, a configuration in which a status of motivity transferred from an engine to the axle shaft is measured without removing a suspension, a damper, a brake and the like has been tried. With such a configuration, it is possible to perform a test while a suspension, a damper and the like remain attached.

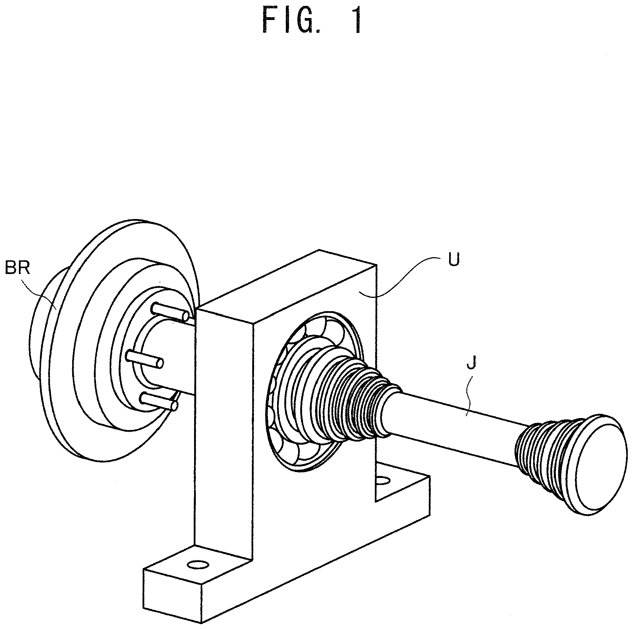

FIG. 1 is a view illustrating an example of a configuration of such a bearing.

As illustrated in FIG. 1, the configuration is such that one end of a joint J is coupled with a fixed type bearing and which is fixedly installed on a floor of a measurement place, and the other end of the joint J is coupled with a dynamometer which is not illustrated. With this configuration, it is possible to perform a test without intentionally removing a brake BR and the like on a side of a vehicle.

However, in this configuration, since a position and an inclination of the axle shaft is restricted by the bearing U, a status of the axle shaft while moving is hardly reproduced. Accordingly, it is impossible to perform a test as to what the motivity transferred to the axle shaft is in a state in which an influence of the status of the axle shaft is factored.

Patent Literature 1 discloses an auxiliary device for motor-vehicle test stands on which the motive behaviour of parts of the motor vehicle are to be tested at rest in conjunction with actions of forces which approximate reality. In order also to be able to cover actions of forces caused by traction or thrust, the normal vehicle wheels are replaced by an auxiliary support or an auxiliary wheel which allows the drive wheels of the vehicle to be loaded when there is a support or auxiliary wheel bearing on a stationary base. A floating wheel suspension can be used to introduce into the wheel, in arbitrary combination, longitudinal and transverse forces as well as torques about a vertical axis of the wheel, and to observe corresponding reactions on the vehicle.

Patent Literature 2 discloses an air floating device for vehicle inspection. The air floating device comprises a base plate and an air floating table arranged thereon, where the floating table has a supporting means at the lower part having an air bearing function for floating the floating table on the base plate and a sucking function for fixing the table on the base plate.

### Citation List

### Patent Literature

Patent Literature 1: DE3507906A1
Patent Literature 2: JP 2008 151509 A

### Non-Patent Literature

Non-patent literature: Internet <URL://www.onosokki.co.jp/HP-WK/wahts_new/catalogs/products/fams8000_4.pdf>

### Summary of Invention

### Technical Problem

An object according to an aspect of the invention is to provide a simulation wheel apparatus which more precisely simulates a status of an axle shaft when a real vehicle is moving on a road, and a vehicle test apparatus which uses the simulation wheel apparatus to perform a test as to what a status of the motivity transferred from an engine to the axle shaft becomes.

### Solution to Problem

A simulation wheel apparatus according to the present invention includes:
plural simulation wheels each of which is attached to a hub of a wheel of a vehicle to replace a wheel with tire, and includes a hub-coupled section having on an outer face side a hub attachment structure to be attached to the hub to replace the wheel with tire and also having a joint attachment structure to which a joint is attached, and a tire attachment section which surrounds the hub-coupled section about the same axis as the hub-coupled section via a bearing interposed between the hub-coupled section and the tire attachment section, and surrounds a circumferential surface of the hub to receive attachment of a tire at a portion surrounding the circumferential surface of the hub;
plural movable stages to each of which each of the plural simulation wheels is fixed in a state in which the rotation of the tire attachment section is controlled, each of the plural movable stages is movable in parallel with a floor; and
a coupling mechanism which is connected to each of the plurality of movable stages, and moves the plural movable stages symmetrically with respect to a center line as an axis of the vehicle.

According to the simulation wheel apparatus of the present invention, it is possible to fit a tire same type as that of a real vehicle to the tire attachment section in a state in which the tire is not rotated via the bearing interposed between the bearing section and the tire attachment section. Thus, under the vehicle test, it is possible to perform a test by simulating a status of the tire carrying a function of absorbing a vibration transferred from an engine to an axle shaft while moving in addition to mechanisms of the suspension, the damper and the like. In addition, since the above-described simulation wheel apparatus may freely move with respect to a floor surface, for example, a change of tire position with a change of axle shaft attitude may be reproduced in a manner similar to that while moving on a road. Accordingly, it is possible to perform the test in a state in which a status of the axle shaft while the real vehicle moves on a road is more precisely simulated.

The simulation wheel and the movable stage are attached to each of the plural hubs of the vehicle, so that statuses of the axle shafts continuing to the plural hubs are reproduced in a similar manner to moving, and it is possible to perform a test by simulating a status more close to moving.

### [deleted]

In addition, in the above-described simulation wheel apparatus of the present invention, it is preferable that the movable stage has a small friction with a floor surface. For example, one is exemplified that the movable stage including an air jetting section which jets an air externally provided, between the air blowing section and the floor to float.

The movable stage jets air between the movable stage and the floor to float, so that the friction vanishes to make position change of the simulation wheel free.

Incidentally, for the wheel test apparatus according to the present invention, only its basic form is described here since this is simply for avoiding overlaps. However, the wheel test apparatus according to the present invention includes various forms corresponding to the above-described forms of the simulation wheel apparatus in addition to the basic form.

### Advantageous Effects of Invention

As described above, according to the present invention, a simulation wheel apparatus and a wheel test apparatus which make it possible to perform a test in a status simulating more precisely a status of wheel when a real vehicle moves on a road are obtained.

### Brief Description of the Drawings

[FIG. 1] FIG. 1 is a view illustrating a configuration of a conventional bearing.
[FIG. 2] FIG. 2 is a perspective view illustrating an example of a simulation wheel apparatus for use in explaining embodiments of the present invention.
[FIG. 3] FIG. 3 is a perspective view illustrating the simulation wheel illustrated in FIG. 2.
[FIG. 4] FIG. 4 is a perspective view illustrating a configuration in which a constant velocity joint is connected to the simulation wheel illustrated in FIG. 2.
[FIG. 5] FIG. 5 is a bottom view of the movable stage illustrated in FIG. 2.
[FIG. 6] FIG. 6 is a vertical sectional view illustrating an operational state of the movable stage illustrated in FIG. 5.
[FIG. 7] FIG. 7 is a perspective view illustrating an attachment example of the simulation wheel illustrated in FIG. 2.
[FIG. 8] FIG. 8 is a sectional view illustrating an example of a vehicle test apparatus in which an embodiment of the present invention may be used.
[FIG. 9] FIG. 9 is a plan view illustrating a first embodiment of the simulation wheel apparatus according to the present invention.
[FIG. 10] FIG. 10 is a plan view illustrating a second embodiment of the simulation wheel apparatus according to the present invention.
[FIG. 11] FIG. 11 is a view explaining an example as to movement of vehicle.
[FIG. 12] FIG. 12 is a plan view illustrating a third embodiment of the simulation wheel apparatus according to the present invention.
[FIG. 13] FIG. 13 is a plan view illustrating a fourth embodiment of the simulation wheel apparatus according to the present invention.
[FIG. 14] FIG. 12 is a plan view illustrating a fifth embodiment of the simulation wheel apparatus according to the present invention.
[FIG. 15] FIG. 15 is a view explaining an example of configuration with a rack and pinion of a coupling mechanism.
[FIG. 16] FIG. 16 is a view explaining an example of configuration with two cranks of a coupling mechanism.
[FIG. 17] FIG. 17 is a view explaining an example of configuration with a pulley and wire of a coupling mechanism.

### Best Mode for Carrying out the Invention

In the following, embodiments of the invention will be described with reference to the accompanying drawings.

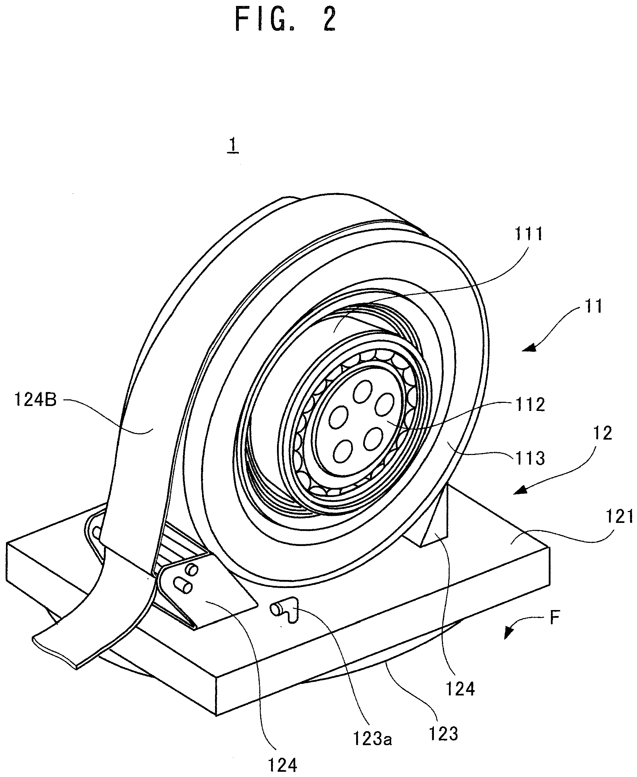

FIG. 2 is a perspective view illustrating an example of a simulation wheel apparatus for use in explaining embodiments of the present invention.

The simulation wheel apparatus illustrated in FIG. 2 includes a simulation wheel 11 and a movable stage 12 to which the simulation wheel 11 is fixed.

The simulation wheel 11 is attached to a hub of a vehicle, replacing a wheel with tire, and includes a tire attachment section 111 and a hub-coupled section 112. The hub-coupled section 112 is attached to the hub of the vehicle, and the tire attachment section 111 is provided to surround the hub-coupled section 112 about the same axis as the hub-coupled section 112. The tire attachment section 111 rotatably supports the hub-coupled section 112. The simulation wheel apparatus 1 also includes a tire 113 attached on an outer circumferential surface of the tire attachment section 111.

The movable stage 12 is a stage freely movable with respect to a floor surface F. The movable stage 12 includes a base 121 on which the simulation wheel is mounted, a diaphragm 123 arranged under the base 121 and a attaching member 124 which attaches the tire 113 to the base 121. The diaphragm 123 jets air externally supplied via a supply opening 123a between the floor surface F and the diaphragm 123, thereby floating itself over the floor surface F. Thus, the movable stage 12 becomes freely movable in parallel with the floor surface F. The fixing member 124 fastens and fixes a belt 124B which is put on an outer circumferential surface of the tire 113, to fix the tire 113 on the movable stage 12. In addition, the fixing member has its own wedge shape and functions as chock for blocking the movement of a wheel. By the fixing member 124, the simulation wheel 11 is fixed on the movable stage 12 in a state in which the rotation of the tire 113 and the tire attachment section 111 is restrained.

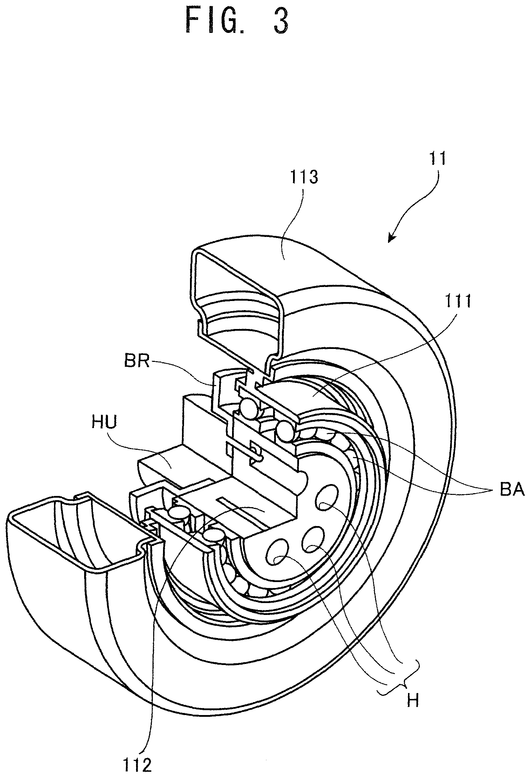

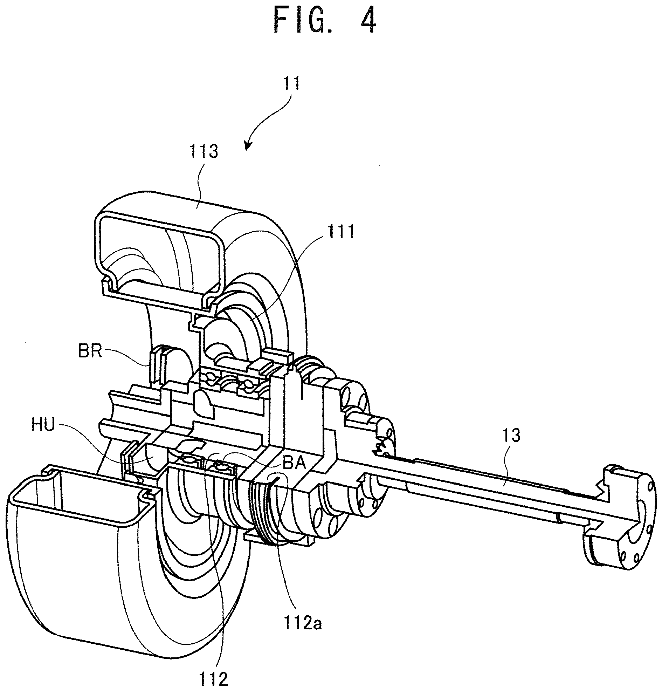

FIGS. 3 and 4 are perspective views illustrating the simulation wheel 11 illustrated in FIG. 2. FIG. 3 illustrates a state of being connected with the hub of the vehicle with a portion removed to illustrate an inside configuration of the simulation wheel 11. In addition, FIG. 4 illustrates a configuration in which a constant velocity joint is connected.

The tire attachment section 111 includes bearings BA, and rotatably supports the hub-coupled section 112 via the bearings BA. The hub-coupled section 112 is provided with a hub attachment mechanism which is attached to the hub HU of the wheel of the vehicle instead of a wheel with tire. In the example illustrated in the figure, a hub configuration in which plural hub holes H through which hub bolts of the hub pass are arranged is exemplified.

The hub-coupled section 112 is arranged to project outwardly so as to be positioned opposite to the hub when attached to the hub HU, in other words, outside the vehicle. For this reason, the simulation wheel 11 may be readily attached to the hub HU of the vehicle, the hub HU being exposed by removing the wheel with tire from the vehicle.

In addition, a constant velocity joint 13 is attached on an outer surface side of the hub-coupled section 112 via a joint attachment section 112a. The joint attachment section 112a corresponds to an example of the joint attachment structure according to the present invention.

The tire attachment section 111 is arranged to surround the hub-coupled section 112 and also surround a circumferential surface of the hub HU, and receives the attachment of the tire 113 at a portion surrounding the circumferential surface of the hub HU. For this reason, the tire 113 is attached at a position same as that of a real vehicle, so that it is possible to make a status of the vehicle be almost same as that when moving on a road. By using the simulation wheel apparatus 1 according to the present example, it is possible to attach the simulation wheel 11 without removing the suspension, the damper, the brake and the like.

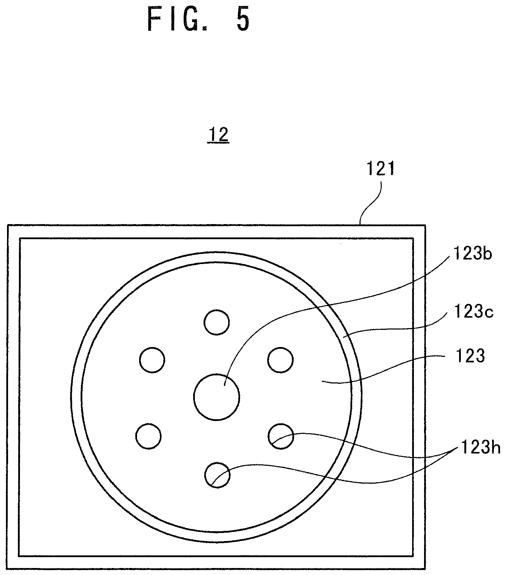

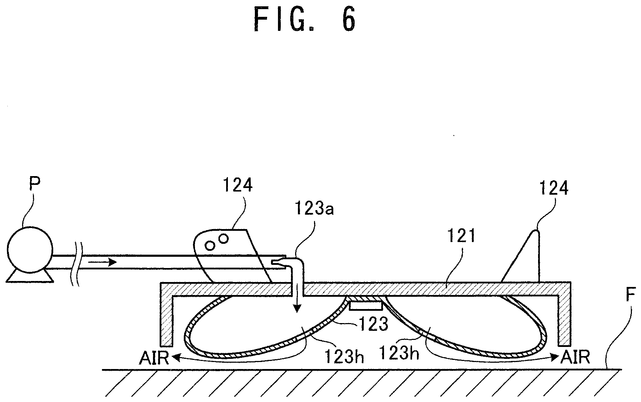

FIG. 5 is a bottom view illustrating an operation state of the movable stage 12 illustrated in FIG. 2. In addition, FIG. 6 is a vertical sectional view illustrating an operational state of the movable stage 12 illustrated in FIG. 5.

The movable stage 12 illustrated in Figs. 5 and 6 is a so-called air bearing, and includes the base 121 and the diaphragm 123. The base 121 is formed of a material resisting deformation such as a metal and a hardened resin. The diaphragm 123 is formed by an approximately circle sheet formed of a flexible resin material, and in which a central section 123b and a peripheral section 123c are intimately contacted to an undersurface of the base 121. The diaphragm 123 is loosely attached to the base 121 to form an air chamber between the diaphragm 123 and the base 121. In addition, jet vents 123h to jet air are formed in the diaphragm 123.

When air is supplied to the movable stage 12 from an external pump P via the supply opening 123a, the supplied air is accumulated between the diaphragm 123 and the base 121 to swell the diaphragm 123. The air chamber is formed between the diaphragm 123 and the base 121. Air AIR in the air chamber is jetted from the jet vents 123h to between the diaphragm 123 and the floor surface F, and flows along the undersurface of the diaphragm 123, and escapes to the outside. At this time, since a thin air layer (air film) is formed between the diaphragm 123 and the floor surface F, the diaphragm 123 floats over the floor surface F with the base 121 thereon. For this reason, the friction between the movable stage 12 and the floor surface F disappears, and a position change of the movable stage 12 becomes free. Here, the diaphragm 123 corresponds to an example of the air jetting section according to the present invention.

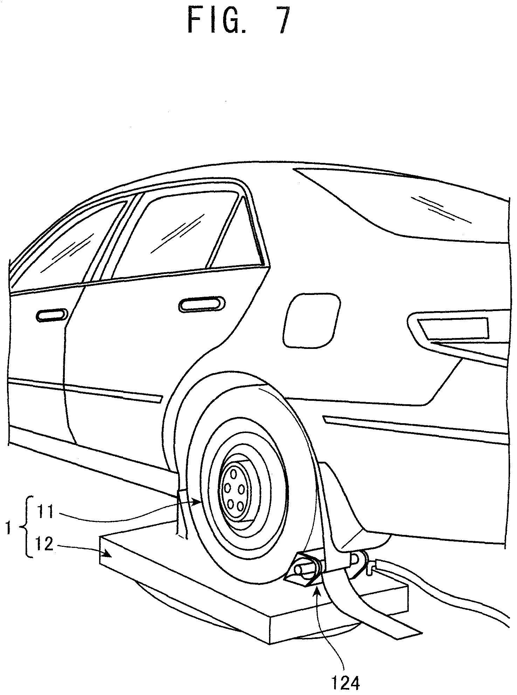

FIG. 7 is a perspective view illustrating an attachment example of the simulation wheel illustrated in FIG. 2.

In attaching the simulation wheel apparatus 1 to the hub of the wheel, the simulation wheel 11 replacing the wheel with tire is attached to the hub HU (see, FIG. 3) of the wheel of the vehicle, and the simulation wheel 11 is fixed to the movable stage 12. More specifically, after a worker attaches the simulation wheel 11 to the hub of the vehicle by using the hub attachment mechanism (the hub holes H), the worker fixes the simulation wheel 11 to the movable stage 12 by the fixing member 124. Furthermore, by only performing work to attach one end of the constant velocity joint 13 via the joint attachment section 112a to the hub-coupled section 112 as illustrated in FIG. 4, and couple the other end to a dynamometer, it is possible to configure a vehicle test apparatus in a similar manner.

Thus, when the simulation wheel 11 may be attached to the wheel while a mechanism of the suspension, the damper, the brake and the like of the real vehicle as illustrated in FIG. 4, an effect that the work of the worker becomes simple is obtained. In addition, since it is possible to configure the tire 113 in addition to the suspension, the damper and the like in a manner similar to a real vehicle, it is possible to perform a test while applying a torque load from the dynamometer to the axle shaft, reproducing a status when the real vehicle moves.

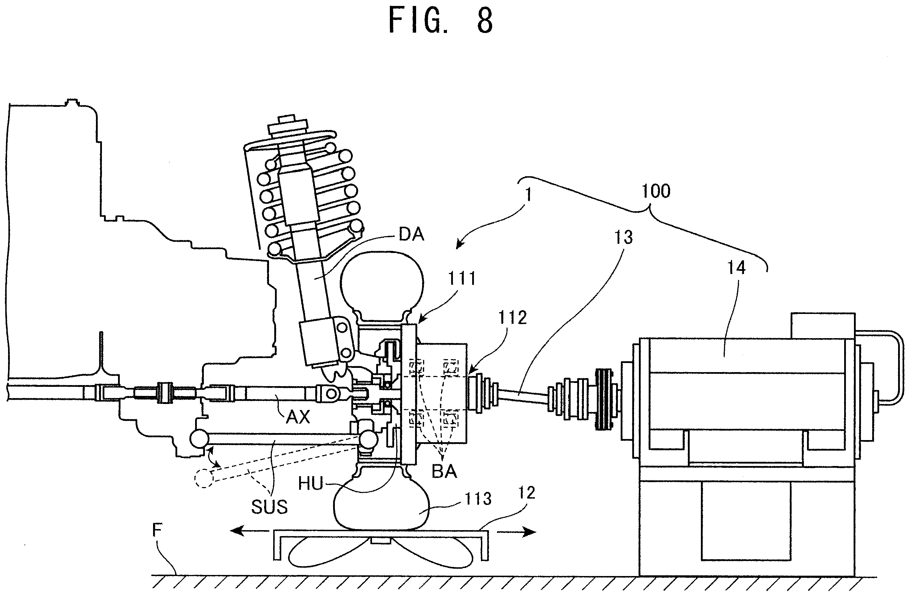

FIG. 8 is a sectional view illustrating an example of a vehicle test apparatus for use with embodiments of the present invention. The simulation wheel apparatus 1 illustrated in FIG. 2 is attached to the hub HU of the vehicle, further, the one end of the constant velocity joint 13 is attached to the simulation wheel apparatus 1, and the other end of the constant velocity joint J is coupled with the dynamometer 14, and thus, the vehicle test apparatus 100 illustrated in FIG. 8 is completed.

In the vehicle test apparatus 100 illustrated in FIG. 8, the bearing BA is interposed between the tire attachment section 111 and the hub-coupled section 112 of the simulation wheel 11, and thus, the vehicle test apparatus 100 has a configuration in which the tire attachment section 111 does not rotate while the hub-coupled section 112 rotates. For this reason, it is possible to fix the tire without fixing the axle shaft AX, and it is possible to make the mechanisms such as the suspension SUS and the damper DA in the vehicle operate in a manner similar to the real vehicle, to perform a test by applying a torque load to the axle shaft AX from the dynamometer 14.

For example, jumping and sinking by a torque reaction force associated with the operation of the engine and the rotation of the axle shaft AX, in other words, up an down movements of the vehicle body with respect to the floor surface F (road surface) are produced in the vehicle body, and so, the axle shaft AX supported by the suspension SUS and the damper DA inclines. If the vehicle is attached with a typical wheel and a typical tire, since the tire rotates on a road surface when normally moving, the contact position to the floor surface of the tire with respect tot the vehicle body freely moves as the axle shaft inclines.

According to the vehicle test apparatus of the present example, the movable stage 12 is movable in parallel with the floor surface F, and a position of the simulation wheel 11 with respect to the floor surface F is not restricted. Accordingly, it is possible to perform a test to make the mechanism such as the suspension SUS and the damper DA in the vehicle operate in a manner similar to the real vehicle, to perform a test. For example, even in a case in which a rotation shaft direction of the hub HU slightly inclines with respect to a horizontal plane (camber angle), or the inclination changes as the vehicle moves up and down, it is possible to reproduce a status same as that of the vehicle when moving. In addition, since the tire 113 is fixed to the movable stage 12, it is possible to perform a test in a status in which a vibration from the engine and the like is absorbed by the deformation of the tire 113 in a manner similar to that of the vehicle while moving.

Next, a first embodiment of the simulation wheel apparatus according to the present invention will be described.

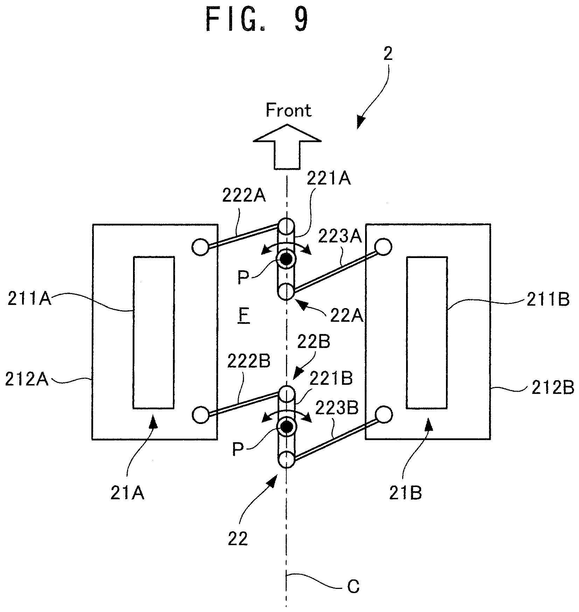

FIG. 9 is a plan view illustrating a first embodiment of the simulation wheel apparatus according to the present invention.

The simulation wheel apparatus 2 illustrated in FIG. 9 is used to replace two tires with wheel on a left side and on a right side of a vehicle. The simulation wheel apparatus 2 includes two simulation wheels 211A, 211 B, two movable stages 212A, 212B and a coupling mechanism, 22. Of the two simulated 211A, 211B, the simulation wheel 211A on the left side is attached to a hub on the left side of the vehicle, the simulation wheel 211B on the right side is attached to a hub on the right side of the vehicle. Here, a combination 21A of the simulation wheel 211A and the movable stage 212A has a configuration same as that of the simulation wheel 1 according to the example of FIG. 2. In other words, the simulation wheel apparatus 2 according to the first embodiment has configuration in which two of the simulation wheels 1 according to the example of FIG. 2 are included. Thus, overlapped descriptions and illustrations about the simulation wheels 211A, 211B and the movable stages 212A, 212B are omitted, and respective positions of them are briefly illustrated in the figure. In addition, the above-described combination 21A, 21B each corresponding to the simulation wheel apparatus 1 according to the example of FIG. 2 are referred to as moving sections 21A, 21B, respectively.

The coupling mechanism 22 of the simulation wheel apparatus 2 are connected to the two movable stages 212A, 212B, respectively, and are for moving the two movable stages 212A, 212B symmetrically with respect to a center line of a vehicle as an axis of the vehicle. The coupling mechanism 22 includes two crank mechanisms 22A, 22B. The crank mechanism 22A, one of the two crank mechanisms 22A, 22B, includes a crank 221A, a connection rod 222A connected between one end of the crank 221A and the movable stage 212A on the left, and a connection rod 223B connected between the other end of the crank 221A and the movable stage 212B on the right. The other crank mechanism 22B, has a configuration similar to that of the crank mechanism 22A, and includes a crank 221B, connection rods 222B and 223B. Rotation shafts P each provided in a center of the each of the cranks 221A, 221B are fixed to the floor surface F, and the cranks 221A, 221B rotate about the rotation shafts P, respectively. The rotation shafts P are arranged to agree with a position of the center line C of the vehicle in which the simulation wheels 211A, 211B are attached to the hubs. The two movable stages 212A, 212B move on the floor surface by the air bearing, and the movable stage 212A on the left and the movable stage 21B on the right move in a manner of ganged together with movements of both ends of the crank 221A and the crank 221B. For this reason, the two movable stages 212A, 212B move laterally symmetrically with respect to a line passing through the rotation shafts P of the cranks 221A, 221B corresponding to the rotations of the cranks 221A, 221B.

In the simulation wheel apparatus 2, since the simulation wheels 211A, 211B are attached to the hubs on both of the left side and the right side of the vehicle, the line passing through the rotation shafts P of the cranks 221A, 221B overlaps the centre line C of the vehicle. According to the simulation wheel apparatus 2, it is possible to make the mechanisms such as the suspension and the damper operate in a manner similar to the vehicle when moving, to perform a test, for either one of a front side on a rear side of the vehicle.

Next, a second embodiment according to the present invention will be described.

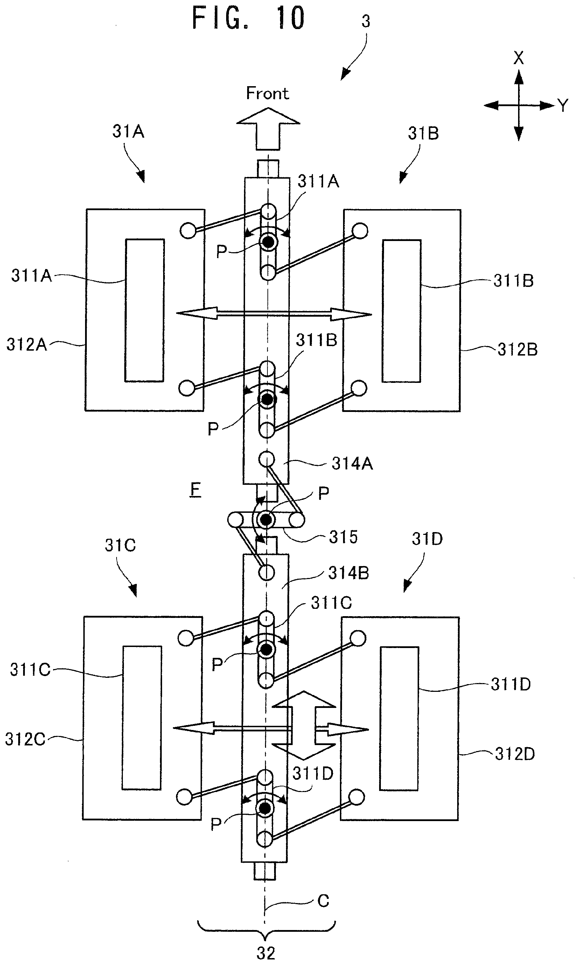

FIG. 10 is a plan view illustrating a second embodiment of the simulation wheel apparatus according to the present invention.

The simulation wheel apparatus 3 illustrated in FIG. 10 is used to replace all of the tires with wheel on a front, a rear, a left and a right of a vehicle. The simulation wheel apparatus 3 includes four moving sections 31A, 31B, 31C, 31D and a coupling mechanism 32. The moving sections 31A, 31B, 31C, 31D include movable stages 312A, 312B, 312C, 312D, respectively. Each of the moving section 31A-31D has a configuration similar to that of the simulation wheel apparatus 1 according to the first embodiment. The simulation wheel 311A-311D are fixed to the movable stages 312A-312D, respectively. The four simulation wheels 311A-311D are attached to four hubs of the vehicle. The simulation wheel apparatus illustrated in FIG. 10 has a configuration in which two of the simulation wheel apparatuses 2 according to the first embodiment illustrated in FIG. 9 are included. However, in the coupling mechanism 32 of the simulation wheel apparatus 3, the rotation shafts of cranks 321A, 321B involved in the connections of the movable stages 31A, 31B are not fixed to the floor surface F as the first embodiment, but are fixed to a slider 314A which is supported movable with respect to the floor surface F in a front-rear direction X. In addition, rotation shafts of cranks 321C, 321D involved in the connections between the moving sections 31C and 31D are fixed to a slider 314B which is supported movably with respect to the floor surface F in the front-rear direction X. The two sliders 314A, 314B are connected with each other via a crank 315 whose rotation shaft P is fixed to the floor surface F, and move symmetrically with respect to front-to-rear about the rotation shaft P of the crank 315. In other words, in the simulation wheel apparatus 3 illustrated in FIG. 10, of the four moving sections 31A-31D, the two moving sections 31A, 31B on the front side move in the front-rear direction X with respect to the tow movable stages 31C, 31D on the rear side, and the two moving sections 31A, 31 B on the front side move symmetrically in a left-right direction Y with respect to the center line C of the vehicle as symmetrical axis, respectively, and the two moving sections 31C, 31D also move symmetrically in the left-right direction Y with respect to the center line C as a symmetrical axis, respectively.

In the simulation wheel apparatus 2 according to the second embodiment, since the simulation wheels 311A-311D are attached to all of the hubs on the front, rear, left and right of the vehicle, respectively, it is possible to make the mechanisms such as the suspensions and the damper operate in a manner similar to that of the vehicle while moving, across all over the vehicle, to perform a test.

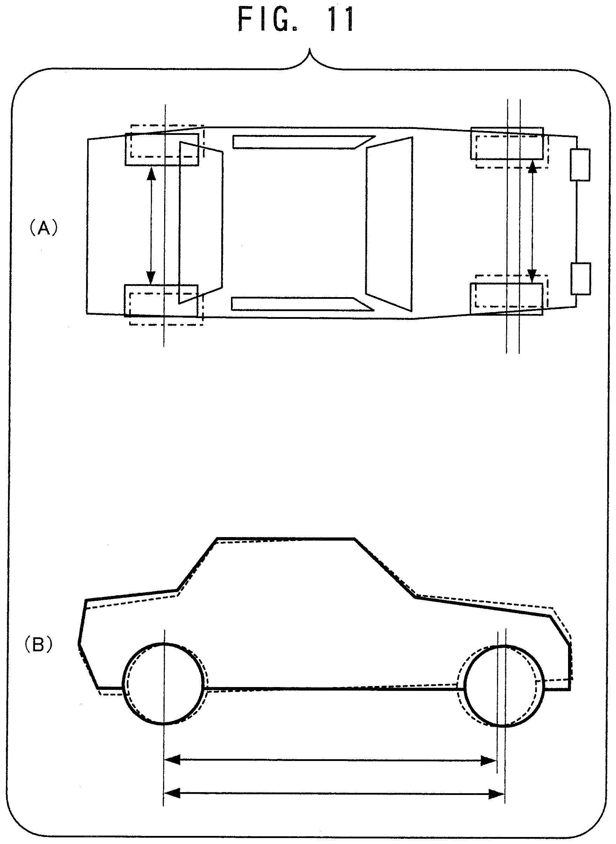

FIG. 11 is a view explaining an example as to movement of vehicle. Part (A) of FIG. 11 illustrates a plan view of a vehicle, and part (B) of FIG. 11 illustrates a side view.

For example, as illustrated in FIG. 11, when a difference between amounts of sinking in a front portion and a rear portion of a vehicle body is produced by a torque reaction force associated with a rotation of an axle shaft, a distance (tread) between the two front wheels and a distance (tread) between the tow rear wheels become different from each other. In addition, a distance (wheelbase) between the front wheel and the rear wheel also changes.

In the simulation wheel apparatus 3 according to the second embodiment, since the simulation wheels 311A-311D which are movable with respect to the floor surface are attached to all of the hubs on the front and rear, and the left and right of the vehicle, it is possible to make the mechanisms such as the suspension and the damper be in a status in which they operate in a manner similar to that of the vehicle when moving, across all over the vehicle, to perform a test. In addition, in the simulation wheel apparatus 3, by the coupling mechanism 32, the simulation wheels 311A-311D move symmetrically in the front-rear direction X about the rotation shaft P of the crank 315, and move symmetrically in the left-right direction Y with respect to the center line C of the vehicle as a symmetrical axis, so that an event of an unintentional movement of the vehicle is avoided.

In the above-described second embodiment the rotation shafts P of the cranks 221A, 221B corresponding to the front wheels are fixed to the slider 314A, and the rotation shafts P of the cranks 221C, 221D corresponding to the rear wheels are fixed to the different slider 314B. In the following, a third embodiment in which a coupling mechanism is different from that of the second embodiment will be described.

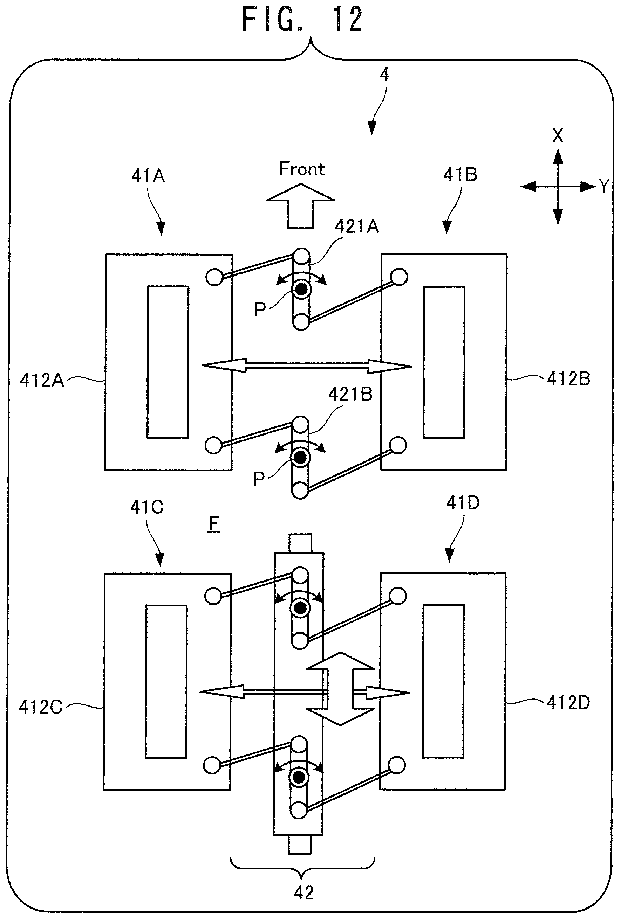

FIG. 12 is a plan view illustrating a third embodiment of the simulation wheel apparatus according to the present invention.

A simulation wheel apparatus illustrated in FIG. 12 is different in a coupling mechanism 3 from the simulation wheel apparatus 3 according to the second embodiment illustrated in FIG. 10. More specifically, in the simulation wheel apparatus 4, rotation shafts p of cranks 421A, 421B interposed between the movable stages 412A, 412B of moving sections 41A, 41B corresponding to front wheels are directly fixed to the floor surface F, and there does not exist a slider. Accordingly, there also does not exist a crank to connect sliders with each other. Remaining of the configuration in the simulation wheel apparatus 4 is similar to that of the simulation wheel apparatus 3 according to the second embodiment, and so, descriptions thereof will be omitted. In the simulation wheel apparatus 4 according to the present embodiment, the moving sections 31A, 41B corresponding to front wheels move only in the left-right direction Y, and however, the moving sections 41C, 41D corresponding to rear wheels move in the front-rear direction X so that it is possible to follow a change of an axle distance between a front wheel and a real wheel in a vehicle.

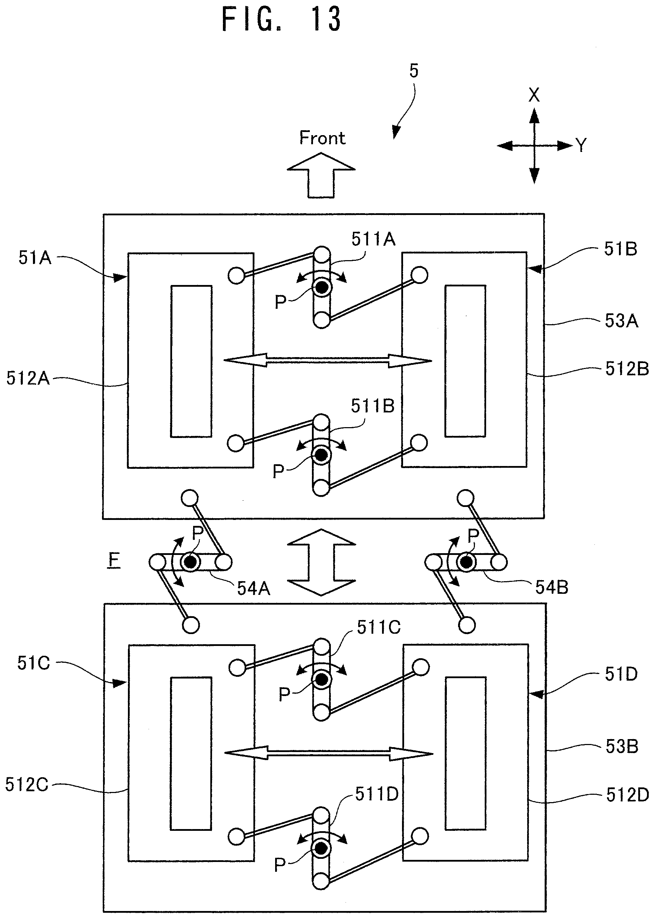

FIG. 13 is a plan view illustrating a fourth embodiment of the simulation wheel apparatus according to the present invention.

A simulation wheel apparatus 5 illustrated in FIG. 13 includes a configuration of two-stage movable stage. More specifically, movable stages 512A, 512B of moving sections 51A, 51B corresponding to the front wheels are placed on a front and rear movable stage 53A which is movable with respect to the floor surface, and rotation shafts P of cranks 521A, 521C interposed between the movable stages 512A, 512B are fixed to the front and rear movable stage 53A. In addition, movable stages 512C, 512D of moving sections 51C, 51D corresponding to rear wheels are placed on a different front and rear movable stage 53B, and rotation shafts P of cranks 521C, 521D interposed between movable stages 512C, 512D are fixed to the front and rear movable stage 53B. The two front and rear movable stages 53A, 53B are connected with each other via cranks 54A, 54B, and rotation shafts P of the cranks 54A, 54B are fixed to the floor surface F. The front and rear movable stages 53A, 53B are so-called air-bearings. The front and rear movable stages 53A, 53B move in the front-rear direction X, and the moving sections 51A, 51B, 51C, 51D move in the left-right direction Y on the front and rear movable stages 53A, 53B. Accordingly, the simulation wheel apparatus 5 according to the present embodiment also may follow a change of an axle distance between a front wheel and a rear wheel in a vehicle.

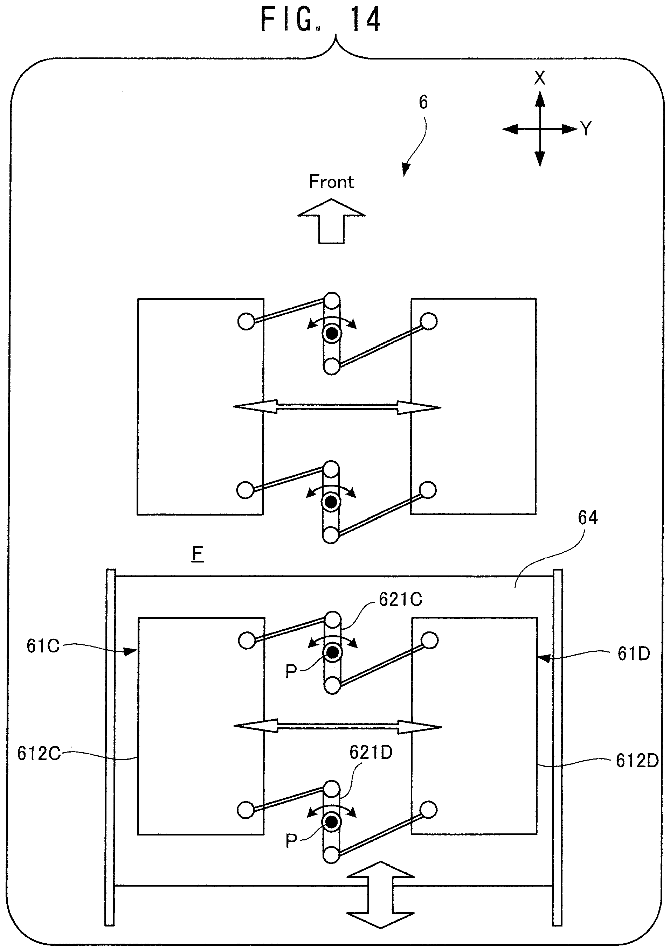

FIG. 14 is a plan view illustrating a fifth embodiment of the simulation wheel apparatus according to the present invention.

In a simulation wheel apparatus 6 illustrated in FIG. 14, movable stage 612C, 612D of moving sections 61C, 61D corresponding to rear wheels are place on a slider 64 which is movable in the front-rear direction X with respect to the floor surface F, rotation shafts P of cranks 621C, 621D interposed between the moving sections 61C, 61D are fixed to the slider 64. The simulation wheel apparatus 6 according to the present embodiment also may follow a change of an axle distance between a front wheel and a rear wheel in a vehicle.

In the above-described embodiments, it is described that the connection between the movable stages is obtained via a crank. However, the coupling mechanism according to the present invention is not limited those described in the embodiments.

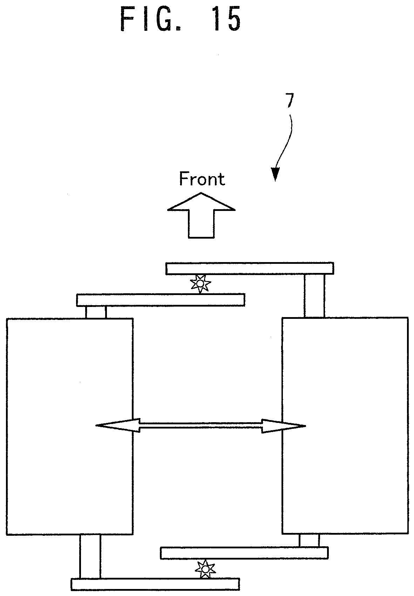

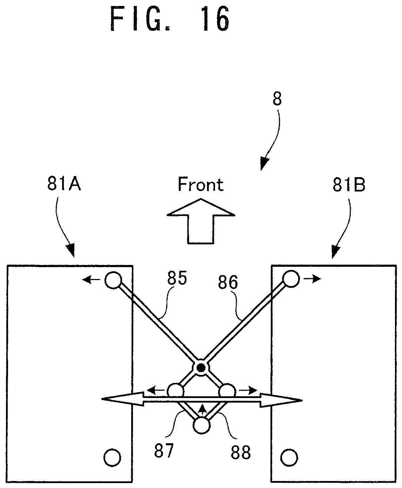

FIGS. 15, 16. 16 are views explaining different configuration examples of the coupling mechanism according to the present invention.

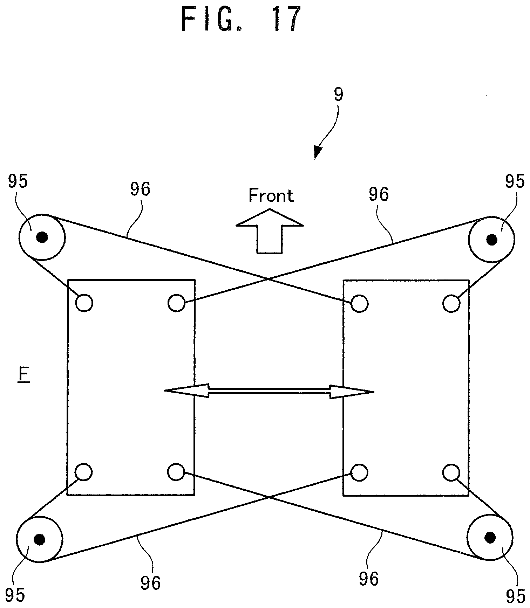

The coupling mechanism may be, for example, one by a pinion-rack mechanism like a simulation wheel apparatus 7 illustrated 15. In addition, like a simulation wheel apparatus 8 illustrated in FIG. 16, the coupling mechanism may be a mechanism in which moving sections 81A, 81B are connected with each other via two cranks 85, 86 having a common rotation shaft therebetween, ends of the cranks 85, 86 respectively opposite to the moving section 81A, 81B are connected by coupling rods 87, 88. In addition, the coupling mechanism may be, for example, like a simulation wheel apparatus 8 illustrated in FIG. 17, a mechanism connected by wires 96 putted over pulleys rotatably supported by the floor surface F.

In addition, in the above-described embodiments as the movable stage to which the simulation wheel is fixed, a configuration in which an air change is formed by a sheet of a flexible resin material is exemplified. However, the movable stage is not limited to this, and for example, a configuration may be applied in which a number of air jetting holes are arranged in a bottom face of a box shape member, and air is jetted from the number of air jetting holes between the floor surface and itself. In addition, the moving mechanism is not limited to a bearing, and may be, for example, a slider moving linearly along a rail.

In addition, in the above-described embodiments, as an example of the fixing member to fix a tire to the movable stage, a belt which is putted over and fastens an outer circumferential surface of a tire is described. However, the fixing member to fix the tire to the movable stage may be, for example, simply a chock.

In addition, in the above-described embodiments, as an example of the joint attachment structure according to the present invention, the joint attachment section 112a on an outer surface side of the hub-coupled section 112 is described. However, the joint attachment structure is not limited to this, and may be, for example, a structure in which a constant velocity joint is directly attached to the hub-coupled section 112 by using the hub holes H.

### Reference Signs List

1, 2, 3, 4, 5, 6, 7, 8: Simulation wheel apparatus
11, 211A, 211B, 311A-311D: Simulation wheel 111: Tire attachment section
112: Hub-coupled section
112a: Joint attachment section
12, 312A-312D, 412A-412D, 512A-512D, 612A-612D: Movable stage
123: Diaphragm
124: Fixing member
13: Constant velocity joint
14: Dynamometer
22, 32, 42: Coupling mechanism
54A, 54B: Crank
64: Slider
100: Vehicle test apparatus
H: Hub hole

## Claims

1. A simulation wheel apparatus (2; 3; 4; 5; 6; 7; 8; 9) comprising:
a plurality of simulation wheels (211A, 211B; 311A to 311D) each of which is configured for attachment to a hub (HU) of a wheel of a vehicle to replace a wheel with tire, and includes a hub-coupled section (112) having on an outer face side a hub attachment structure configured for attachment to the hub (HU) to replace the wheel with tire and also having a joint attachment structure (112a) to which a joint is attached, and a tire attachment section (111) which surrounds the hub-coupled section (112) about the same axis as the hub-coupled section (112) via a bearing (BA) interposed between the hub-coupled section (112) and the tire attachment section (111), and surrounds a circumferential surface of the hub (HU) for receiving attachment of a tire at a portion surrounding the circumferential surface of the hub (HU);
**characterised by**:
a plurality of movable stages (212A, 212B; 312A to 312D; 412A to 412D) to each of which each of the plurality of simulation wheels (211A, 211B; 311A to 311D) is fixed in a state in which the rotation of the tire attachment section (111) is controlled, each of the plurality of movable stages (212A, 212B; 312A to 312D; 412A to 412D) is movable in parallel with a floor (F); and
a coupling mechanism (22; 32; 42) which is connected to each of the plurality of movable stages (212A, 212B; 312A to 312D; 412A to 412D), and is operable to move the plurality of movable stages (212A, 212B; 312A to 312D; 412A to 412D) symmetrically with respect to a center line as an axis of the vehicle.

## Patentansprüche

1. Simulationsradvorrichtung (2; 3; 4; 5; 6; 7; 8; 9), umfassend:
mehrere Simulationsräder (211A, 211B; 311A bis 311D), jedes davon zur Befestigung an einer Nabe (HU) eines Rades eines Fahrzeugs ausgebildet, um ein Rad mit Reifen zu ersetzen, und aufweisend einen nabengekoppelten Abschnitt (112), der an einer Außenseite eine Nabenbefestigungsstruktur aufweist, die zur Befestigung an der Nabe (HU) ausgebildet ist, um das Rad mit Reifen zu ersetzen, und außerdem eine Gelenkbefestigungsstruktur (112a) aufweist, an der ein Gelenk befestigt ist, und einen Reifenbefestigungsabschnitt (111), der den nabengekoppelten Abschnitt (112) um die gleiche Achse umgibt wie der nabengekoppelte Abschnitt (112), über ein zwischen dem nabengekoppelten Abschnitt (112) und dem Reifenbefestigungsabschnitt (111) angeordnetes Lager (BA), und eine Umfangsfläche der Nabe (HU) zum Aufnehmen der Anbringung eines Reifens an einem Abschnitt umgibt, der die Umfangsfläche der Nabe (HU) umgibt;
**gekennzeichnet durch**:
mehrere bewegliche Bühnen (212A, 212B; 312A bis 312D; 412A bis 412D), an jede von denen jedes der mehreren Simulationsräder (211A, 211B; 311A bis 311D) in einem Zustand fixiert ist, in dem die Drehung des Reifenbefestigungsabschnitts (111) gesteuert wird, wobei jede der mehreren beweglichen Bühnen (212A, 212B; 312A bis 312D; 412A bis 412D) parallel zu einem Boden (F) bewegbar ist; und
einen Kopplungsmechanismus (22; 32; 42), der mit jeder der mehreren beweglichen Bühnen (212A, 212B; 312A bis 312D; 412A bis 412D) verbunden ist und dazu betreibbar ist, die mehreren beweglichen Bühnen (212A, 212B; 312A bis 312D; 412A bis 412D) in Bezug auf eine Mittellinie, als Achse des Fahrzeugs, symmetrisch zu bewegen.

## Revendications

1. Appareil à roues de simulation (2 ; 3 ; 4 ; 5 ; 6 ; 7 ; 8 ; 9) comprenant :
une pluralité de roues de simulation (211A, 211B ; 311A à 311D) chacune étant configurée pour être fixée à un moyeu (HU) d'une roue d'un véhicule pour remplacer une roue à pneumatique, et comprend une section couplée au moyeu (112) ayant sur un côté de face extérieure une structure de fixation de moyeu configurée pour se fixer au moyeu (HU) pour remplacer la roue à pneumatique et ayant également une structure de fixation de raccord (112a) à laquelle un raccord est fixé, et une section de fixation de pneumatique (111) qui entoure la section couplée au moyeu (112) autour du même axe que la section couplée au moyeu (112) par l'intermédiaire d'un palier (BA) interposée entre la section couplée au moyeu (112) et la section de fixation de pneumatique (111), et entoure une surface circonférentielle du moyeu (HU) pour recevoir une fixation d'un pneumatique au niveau d'une partie entourant la surface circonférentielle du moyeu (HU) ;
**caractérisé par** :
une pluralité d'étages mobiles (212A, 212B ; 312A à 312D ; 412A à 412D) à chacun desquels est fixée chacune de la pluralité de roues de simulation (211A, 211B ; 311A à 311D) dans un état dans lequel la rotation de la section de fixation de pneumatique (111) est commandée, chacun de la pluralité d'étages mobiles (212A, 212B ; 312A à 312D ; 412A à 412D) est mobile parallèlement à un sol (F) ; et
un mécanisme de couplage (22 ; 32 ; 42) qui est connecté à chacun de la pluralité d'étages mobiles (212A, 212B ; 312A à 312D ; 412A à 412D), et est opérationnel pour déplacer la pluralité d'étages mobiles (212A, 212B ; 312A à 312D ; 412A à 412D) symétriquement par rapport à une ligne centrale en tant qu'axe du véhicule.
